# EUROPEAN PATENT APPLICATION

(11) **EP 2 878 199 A1**
(43) Date of publication of application: **03.06.2015**
(21) Application number: 13194550.3
(22) Date of filing: 27.11.2013
(51) Int. Cl.: A01P 7/04, A01N 43/90, A01N 25/00

(54) **Method of protecting a plant propagation material**

(71) Applicant: Syngenta Participations AG, 4058 Basel (CH)
(72) Inventor: The designation of the inventor has not yet been filed
(74) Representative: Syngenta International AG

(57) **Abstract**

The present invention relates to a method for using insecticidally active bicyclic derivatives in the control of insects or representatives of the order Acarina in a plant propagation material, by applying a compound of formula I 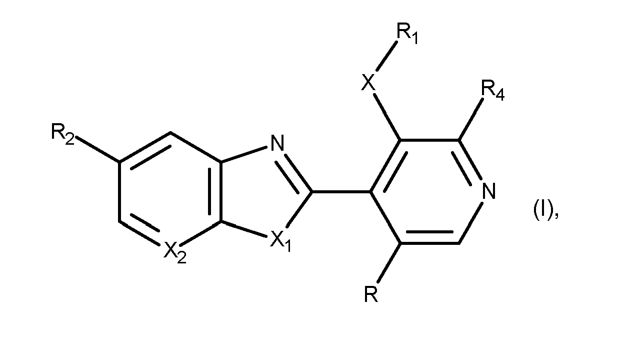 wherein X is S, SO or SO₂; R is hydrogen, halogen or C₁-C₄haloalkyl;
X₁ is O, S or N-R₃, wherein R₃ is C₁-C₄alkyl, C₁-C₄haloalkyl or C₁-C₆alkoxy-C₁-C₆alkyl, or X₁ is N-(4-methoxy-benzyl) or N-(propargyl);
X₂ is N, CH, C-halogen, C-CN, C-O-C₁-C₄alkyl, N-(2-chloro-thiazol-5-ylmethyl), C-S-C₁-C₄alkyl, C-SO₂-C₁-C₄alkyl, C-S-phenyl, C-SO₂-phenyl or C-SO₂-C₁-C₄halolakyl;
R₁ is C₁-C₄alkyl, C₁-C₄haloalkyl, C₃-C₆cycloalkyl, C₃-C₆halocycloalkyl, C₂-C₆alkenyl, C₂-C₆haloalkenyl or C₂-C₆alkynyl;
R₂ is halogen, C₁-C₄haloalkyl, C₁-C₄haloalkyl substituted by one or two hydroxy, or R₂ is C₁-C₄haloalkylthio, C₁-C₄haloalkylsulfonyl, O(C₁-C₄haloalkyl), SF₅, phenylcarbonylthio, mercapto, or C₁-C₄alkoxycarbonyl; and
R₄ is hydrogen or halogen;
and agrochemically acceptable salts and N-oxides of those compounds.

## Description

The present invention relates to a method for using insecticidally active bicyclic derivatives in the control of insects or representatives of the order Acarina in a plant propagation material, by applying the compound on to the plant propagation material, and to plant propagation material compositions thereof.

Pesticidal active ingredients for controlling pathogens and pests in plant propagation materials and plant organs that grow at a later point in time are described in the literature. The biological properties of those known compounds are not entirely satisfactory in the areas of insect control, phytotoxicity, and environmental and worker exposure, for example. In particular, in the instance an insect has become, or risks becoming resistant to the previously known compounds, improved methods of control or prevention are sought.

There is a continuing need to provide pesticidal compositions, which provide improved, for example, biological properties, especially for controlling insects and representatives of the order Acarina.

The compounds used in the method according to the present invention are known for their insecticidal activity. The compounds and their preparation are described, for example, in WO 2010/125985. It has now been found that a certain substituted bicyclic derivatives selected from WO 2010/125985 have unexpectedly good activity when applied onto a plant propagation material.

Accordingly, in a first aspect, the present invention provides a method for the control of insects or representatives of the order Acarina in a plant propagation material, which comprises applying on the plant propagation material a compound of formula I 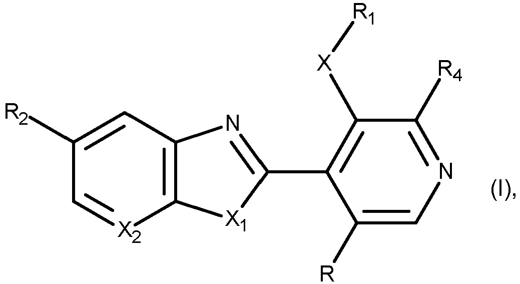
wherein X is S, SO or SO₂ ; R is hydrogen, halogen or C₁-C₄haloalkyl;
X₁ is O, S or N-R₃, wherein R₃ is C₁-C₄alkyl, C₁-C₄haloalkyl or C₁-C₆alkoxy-C₁-C₆alkyl, or X₁ is N-(4-methoxy-benzyl) or N-(propargyl);
X₂ is N, CH, C-halogen, C-CN, C-O-C₁-C₄alkyl, N-(2-chloro-thiazol-5-ylmethyl), C-S-C₁-C₄alkyl, C-SO₂-C₁-C₄alkyl, C-S-phenyl, C-SO₂-phenyl or C-SO₂-C₁-C₄halolakyl;
R₁ is C₁-C₄alkyl, C₁-C₄haloalkyl, C₃-C₆cycloalkyl, C₃-C₆halocycloalkyl, C₂-C₆alkenyl, C₂-C₆haloalkenyl or C₂-C₆alkynyl;
R₂ is halogen, C₁-C₄haloalkyl, C₁-C₄haloalkyl substituted by one or two hydroxy, or R₂ is C₁-C₄haloalkylthio, C₁-C₄haloalkylsulfonyl, O(C₁-C₄haloalkyl), SF₅, phenylcarbonylthio, mercapto, or C₁-C₄alkoxycarbonyl; and
R₄ is hydrogen or halogen;
and agrochemically acceptable salts and N-oxides of those compounds.

The compounds of formula I can be prepared according to the methods disclosed in WO 2010/125985.

The alkyl groups occurring in the definitions of the substituents can be straight-chain or branched and are, for example, methyl, ethyl, n-propyl, isopropyl, n-butyl, sec-butyl, iso-butyl, and tert-butyl.

Haloalkyl groups preferably have a chain length of from 1 to 4 carbon atoms. Haloalkyl is, for example, fluoromethyl, difluoromethyl, trifluoromethyl, chloromethyl, dichloromethyl, trichloromethyl, 2,2,2-trifluoroethyl, 2-fluoroethyl, 2-chloroethyl, pentafluoroethyl, 1,1-difluoro-2,2,2-trichloroethyl, 2,2,3,3-tetrafluoroethyl and 2,2,2-trichloroethyl; preferably trichloromethyl, difluorochloromethyl, difluoromethyl, trifluoromethyl and dichlorofluoromethyl, in particular trifluoromethyl.

Compounds of formula I which have at least one basic centre can form, for example, acid addition salts, for example with strong inorganic acids such as mineral acids, for example perchloric acid, sulphuric acid, nitric acid, nitrose acid, a phosphorus acid or a hydrohalic acid, with strong organic carboxylic acids, such as C₁-C₄alkanecarboxylic acids which are unsubstituted or substituted, for example by halogen, for example acetic acid, such as saturated or unsaturated dicarboxylic acids, for example oxalic acid, malonic acid, succinic acid, maleic acid, fumaric acid or phthalic acid, such as hydroxycarboxylic acids, for example ascorbic acid, lactic acid, malic acid, tartaric acid or citric acid, or such as benzoic acid, or with organic sulfonic acids, such as C₁-C₄alkane- or arylsulfonic acids which are unsubstituted or substituted, for example by halogen, for example methane- or p-toluenesulfonic acid. Compounds of formula I which have at least one acidic group can form, for example, salts with bases, for example mineral salts such as alkali metal or alkaline earth metal salts, for example sodium, potassium or magnesium salts, or salts with ammonia or an organic amine, such as morpholine, piperidine, pyrrolidine, a mono-, di- or tri-lower-alkylamine, for example ethyl-, diethyl-, triethyl- or dimethylpropylamine, or a mono-, di- or trihydroxy-lower-alkylamine, for example mono-, di- or triethanolamine.

Salts of compounds of formula I can be prepared in a manner known per se. Thus, for example, acid addition salts of compounds of formula I are obtained by treatment with a suitable acid or a suitable ion exchanger reagent and salts with bases are obtained by treatment with a suitable base or with a suitable ion exchanger reagent.

Salts of compounds of formula I can be converted in the customary manner into the free compounds I, acid addition salts, for example, by treatment with a suitable basic compound or with a suitable ion exchanger reagent and salts with bases, for example, by treatment with a suitable acid or with a suitable ion exchanger reagent.

Salts of compounds of formula I can be converted in a manner known per se into other salts of compounds of formula I, acid addition salts, for example, into other acid addition salts, for example by treatment of a salt of inorganic acid such as hydrochloride with a suitable metal salt such as a sodium, barium or silver salt, of an acid, for example with silver acetate, in a suitable solvent in which an inorganic salt which forms, for example silver chloride, is insoluble and thus precipitates from the reaction mixture.

Depending on the procedure or the reaction conditions, the compounds of formula I, which have salt-forming properties can be obtained in free form or in the form of salts.

The compounds of formula I and, where appropriate, the tautomers thereof, in each case in free form or in salt form, can, if appropriate, also be obtained in the form of hydrates and/or include other solvents, for example those which may have been used for the crystallization of compounds which are present in solid form.

A preferred group of compounds of formula I is represented by the compounds of formula la 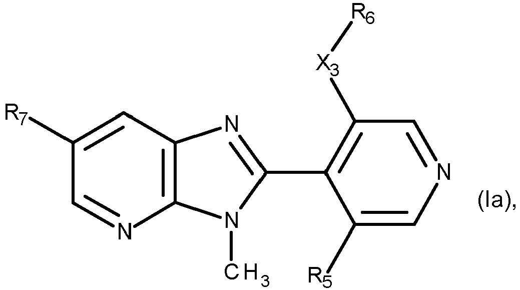 wherein X₃ is S, SO or SO₂; R₅ is hydrogen or C₁-C₄haloalkyl; R₆ is methyl, ethyl, n-propyl or i-propyl; and R₇ is C₁-C₄haloalkyl; and agrochemically acceptable salts and N-oxides of those compounds.

Preferably in the compounds of formula la, X₃ is S, SO or SO₂ and R₅ is hydrogen, halogen or trifluoromethyl.

In preferred compounds of formula la,
X₃ is S, SO or SO₂ and R₅ is hydrogen.

In another preferred group of compounds of formula la,
X₃ is S, SO or SO₂ and R₅ is halogen.

Further preferred compounds of formula la are those, wherein
X₃ is S, SO or SO₂ and R₅ is trifluoromethyl.

In especially preferred compounds of formula la,
X₃ is SO₂, R₅ is hydrogen, R₆ is ethyl and R₇ is trifluoromethyl;
X₃ is SO, R₅ is hydrogen, R₆ is ethyl and R₇ is trifluoromethyl; or
X₃ is S, R₅ is hydrogen, R₆ is ethyl and R₇ is trifluoromethyl.

Preferred compounds of formula I are listed in Table 1:

**Table 1:**

| Comp.No | R | R₁ | R₂ | R₄ | X | X₁ | X₂ |
|---|---|---|---|---|---|---|---|
| 1.001 | H | -CH₂-CH₃ | CF₃ | H | SO₂ | N-CH₃ | N |
| 1.002 | CF₃ | -CH₂-CH₃ | CF₃ | H | SO₂ | N-CH₃ | N |
| 1.003 | H | -CH₂-CH₃ | CF₃ | H | SO | N-CH₃ | N |
| 1.004 | CF₃ | -CH₂-CH₃ | CF₃ | H | SO | N-CH₃ | N |
| 1.005 | H | -CH₂-CH₃ | CF₃ | H | S | N-CH₃ | N |
| 1.006 | CF₃ | -CH₂-CH₃ | CF₃ | H | S | N-CH₃ | N |
| 1.007 | H | -CH₂-CH₃ | -CF₂CF₃ | H | SO₂ | N-CH₃ | N |
| 1.008 | CF₃ | -CH₂-CH₃ | -CF₂CF₃ | H | SO₂ | N-CH₃ | N |
| 1.009 | H | -CH₂-CH₃ | -CF₂CF₃ | H | SO | N-CH₃ | N |
| 1.010 | CF₃ | -CH₂-CH₃ | -CF₂CF₃ | H | SO | N-CH₃ | N |
| 1.011 | H | -CH₂-CH₃ | -CF₂CF₃ | H | S | N-CH₃ | N |
| 1.012 | CF₃ | -CH₂-CH₃ | -CF₂CF₃ | H | S | N-CH₃ | N |
| 1.013 | H | -CH₂-CH₃ | CF₃ | H | SO₂ | S | N |
| 1.014 | CF₃ | -CH₂-CH₃ | CF₃ | H | SO₂ | S | N |
| 1.015 | H | -CH₂-CH₃ | CF₃ | H | SO | S | N |
| 1.016 | CF₃ | -CH₂-CH₃ | CF₃ | H | SO | S | N |
| 1.017 | H | -CH₂-CH₃ | CF₃ | H | S | S | N |
| 1.018 | CF₃ | -CH₂-CH₃ | CF₃ | H | S | S | N |
| 1.019 | H | -CH₂-CH₃ | -CF₂CF₃ | H | SO₂ | S | N |
| 1.020 | CF₃ | -CH₂-CH₃ | -CF₂CF₃ | H | SO₂ | S | N |
| 1.021 | H | -CH₂-CH₃ | -CF₂CF₃ | H | SO | S | N |
| 1.022 | CF₃ | -CH₂-CH₃ | -CF₂CF₃ | H | SO | S | N |
| 1.023 | H | -CH₂-CH₃ | -CF₂CF₃ | H | S | S | N |
| 1.024 | CF₃ | -CH₂-CH₃ | -CF₂CF₃ | H | S | S | N |
| 1.025 | H | -CH₂-CH₃ | S(O)CF₃ | H | SO₂ | N-CH₃ | N |
| 1.026 | CF₃ | -CH₂-CH₃ | S(O)CF₃ | H | SO₂ | N-CH₃ | N |
| 1.027 | H | -CH₂-CH₃ | S(O)CF₃ | H | SO | N-CH₃ | N |
| 1.028 | CF₃ | -CH₂-CH₃ | S(O)CF₃ | H | SO | N-CH₃ | N |
| 1.029 | H | -CH₂-CH₃ | S(O)CF₃ | H | S | N-CH₃ | N |
| 1.030 | CF₃ | -CH₂-CH₃ | S(O)CF₃ | H | S | N-CH₃ | N |
| 1.031 | H | -CH₂-CH₃ | S(O₂)CF₃ | H | SO₂ | N-CH₃ | N |
| 1.032 | CF₃ | -CH₂-CH₃ | S(O₂)CF₃ | H | SO₂ | N-CH₃ | N |
| 1.033 | H | -CH₂-CH₃ | S(O₂)CF₃ | H | SO | N-CH₃ | N |
| 1.034 | CF₃ | -CH₂-CH₃ | S(O₂)CF₃ | H | SO | N-CH₃ | N |
| 1.035 | H | -CH₂-CH₃ | S(O₂)CF₃ | H | S | N-CH₃ | N |
| 1.036 | CF₃ | -CH₂-CH₃ | S(O₂)CF₃ | H | S | N-CH₃ | N |
| 1.037 | H | -CH₂-CH₃ | SCF₃ | H | SO₂ | N-CH₃ | N |
| 1.038 | CF₃ | -CH₂-CH₃ | SCF₃ | H | SO₂ | N-CH₃ | N |
| 1.039 | H | -CH₂-CH₃ | SCF₃ | H | SO | N-CH₃ | N |
| 1.040 | CF₃ | -CH₂-CH₃ | SCF₃ | H | SO | N-CH₃ | N |
| 1.041 | H | -CH₂-CH₃ | SCF₃ | H | S | N-CH₃ | N |
| 1.042 | CF₃ | -CH₂-CH₃ | SCF₃ | H | S | N-CH₃ | N |
| 1.043 | H | -CH₂-CH₃ | CF₃ | H | SO₂ | N-CH₃ | CH |
| 1.044 | CF₃ | -CH₂-CH₃ | CF₃ | H | SO₂ | N-CH₃ | CH |
| 1.045 | H | -CH₂-CH₃ | CF₃ | H | SO | N-CH₃ | CH |
| 1.046 | CF₃ | -CH₂-CH₃ | CF₃ | H | SO | N-CH₃ | CH |
| 1.047 | H | -CH₂-CH₃ | CF₃ | H | S | N-CH₃ | CH |
| 1.048 | CF₃ | -CH₂-CH₃ | CF₃ | H | S | N-CH₃ | CH |
| 1.049 | H | -CH₂-CH₃ | -CF₂CF₃ | H | SO₂ | N-CH₃ | CH |
| 1.050 | CF₃ | -CH₂-CH₃ | -CF₂CF₃ | H | SO₂ | N-CH₃ | CH |
| 1.051 | H | -CH₂-CH₃ | -CF₂CF₃ | H | SO | N-CH₃ | CH |
| 1.052 | CF₃ | -CH₂-CH₃ | -CF₂CF₃ | H | SO | N-CH₃ | CH |
| 1.053 | H | -CH₂-CH₃ | -CF₂CF₃ | H | S | N-CH₃ | CH |
| 1.054 | CF₃ | -CH₂-CH₃ | -CF₂CF₃ | H | S | N-CH₃ | CH |
| 1.055 | H | -CH₂-CH₃ | CF₃ | H | SO₂ | S | CH |
| 1.056 | CF₃ | -CH₂-CH₃ | CF₃ | H | SO₂ | S | CH |
| 1.057 | H | -CH₂-CH₃ | CF₃ | H | SO | S | CH |
| 1.058 | CF₃ | -CH₂-CH₃ | CF₃ | H | SO | S | CH |
| 1.059 | H | -CH₂-CH₃ | CF₃ | H | S | S | CH |
| 1.060 | CF₃ | -CH₂-CH₃ | CF₃ | H | S | S | CH |
| 1.061 | H | -CH₂-CH₃ | -CF₂CF₃ | H | SO₂ | S | CH |
| 1.062 | CF₃ | -CH₂-CH₃ | -CF₂CF₃ | H | SO₂ | S | CH |
| 1.063 | H | -CH₂-CH₃ | -CF₂CF₃ | H | SO | S | CH |
| 1.064 | CF₃ | -CH₂-CH₃ | -CF₂CF₃ | H | SO | S | CH |
| 1.065 | H | -CH₂-CH₃ | -CF₂CF₃ | H | S | S | CH |
| 1.066 | CF₃ | -CH₂-CH₃ | -CF₂CF₃ | H | S | S | CH |
| 1.067 | H | -CH₂-CH₃ | S(O)CF₃ | H | SO₂ | N-CH₃ | CH |
| 1.068 | CF₃ | -CH₂-CH₃ | S(O)CF₃ | H | SO₂ | N-CH₃ | CH |
| 1.069 | H | -CH₂-CH₃ | S(O)CF₃ | H | SO | N-CH₃ | CH |
| 1.070 | CF₃ | -CH₂-CH₃ | S(O)CF₃ | H | SO | N-CH₃ | CH |
| 1.071 | H | -CH₂-CH₃ | S(O)CF₃ | H | S | N-CH₃ | CH |
| 1.072 | CF₃ | -CH₂-CH₃ | S(O)CF₃ | H | S | N-CH₃ | CH |
| 1.073 | H | -CH₂-CH₃ | S(O₂)CF₃ | H | SO₂ | N-CH₃ | CH |
| 1.074 | CF₃ | -CH₂-CH₃ | S(O₂)CF₃ | H | SO₂ | N-CH₃ | CH |
| 1.075 | H | -CH₂-CH₃ | S(O₂)CF₃ | H | SO | N-CH₃ | CH |
| 1.076 | CF₃ | -CH₂-CH₃ | S(O₂)CF₃ | H | SO | N-CH₃ | CH |
| 1.077 | H | -CH₂-CH₃ | S(O₂)CF₃ | H | S | N-CH₃ | CH |
| 1.078 | CF₃ | -CH₂-CH₃ | S(O₂)CF₃ | H | S | N-CH₃ | CH |
| 1.079 | H | -CH₂-CH₃ | SCF₃ | H | SO₂ | N-CH₃ | CH |
| 1.080 | CF₃ | -CH₂-CH₃ | SCF₃ | H | SO₂ | N-CH₃ | CH |
| 1.081 | H | -CH₂-CH₃ | SCF₃ | H | SO | N-CH₃ | CH |
| 1.082 | CF₃ | -CH₂-CH₃ | SCF₃ | H | SO | N-CH₃ | CH |
| 1.083 | H | -CH₂-CH₃ | SCF₃ | H | S | N-CH₃ | CH |
| 1.084 | CF₃ | -CH₂-CH₃ | SCF₃ | H | S | N-CH₃ | CH |

and the N-oxides of the compounds of Table 1.

The invention also relates to a plant propagation material treated with the compound defined in the first aspect.
The compounds of formula I according to the invention are valuable active ingredients in the field of pest control, even at low rates of application, which have a very favorable biocidal spectrum and are well tolerated by warm-blooded species, fish and plants. The active ingredients according to the invention act against all or individual developmental stages of normally sensitive, but also resistant, animal pests, such as insects or representatives of the order Acarina. The insecticidal or acaricidal activity of the active ingredients according to the invention can manifest itself directly, i. e. in destruction of the pests, which takes place either immediately or only after some time has elapsed, for example during ecdysis, or indirectly, for example in a reduced oviposition and/or hatching rate, a good activity corresponding to a destruction rate (mortality) of at least 50%.

The compounds of formula I can be used to combat and control infestations of insect pests such as Lepidoptera, Diptera, Hemiptera, Thysanoptera, Orthoptera, Dictyoptera, Coleoptera, Siphonaptera, Hymenoptera and Isoptera and also other invertebrate pests, for example, acarine, nematode and mollusc pests. Insects, acarines, nematodes and molluscs are hereinafter collectively referred to as pests. The pests which may be combated and controlled by the use of the invention compounds include those pests associated with agriculture (which term includes the growing of crops for food and fibre products), horticulture and animal husbandry, companion animals, forestry and the storage of products of vegetable origin (such as fruit, grain and timber); those pests associated with the damage of man-made structures and the transmission of diseases of man and animals; and also nuisance pests (such as flies).
Examples of pest species which may be controlled by the compounds of formula I include: *Myzus persicae* (aphid), *Aphis gossypii* (aphid), *Aphis fabae* (aphid), *Lygus* spp. (capsids), *Dysdercus* spp. (capsids), *Nilaparvata lugens* (planthopper), *Nephotettixc incticeps* (leafhopper), *Nezara* spp. (stinkbugs), *Euschistus* spp. (stinkbugs), *Leptocorisa* spp. (stinkbugs), *Frankliniella occidentalis* (thrip), Thrips spp. (thrips), *Leptinotarsa decemlineata* (Colorado potato beetle), *Anthonomus grandis* (boll weevil), *Aonidiella* spp. (scale insects), *Trialeurodes* spp. (white flies), *Bemisia tabaci* (white fly), *Ostrinia nubilalis* (European corn borer), *Spodoptera littoralis* (cotton leafworm), *Heliothis virescens* (tobacco budworm), *Helicoverpa armigera* (cotton bollworm), *Helicoverpa zea* (cotton bollworm), *Sylepta derogata* (cotton leaf roller), *Pieris brassicae* (white butterfly), *Plutella xylostella* (diamond back moth), *Agrotis* spp. (cutworms), *Chilo suppressalis* (rice stem borer), *Locusta migratoria* (locust), *Chortiocetes terminifera* (locust), *Diabrotica* spp. (rootworms), *Panonychus ulmi* (European red mite), *Panonychus citri* (citrus red mite), *Tetranychus urticae* (two-spotted spider mite), *Tetranychus cinnabarinus* (carmine spider mite), *Phyllocoptruta oleivora* (citrus rust mite), *Polyphagotarsonemus latus* (broad mite), *Brevipalpus* spp. (flat mites), *Boophilus microplus* (cattle tick), *Dermacentor variabilis* (American dog tick), *Ctenocephalides felis* (cat flea), *Liriomyza* spp. (leafminer), *Musca domestica* (housefly), *Aedes aegypti* (mosquito), *Anopheles* spp. (mosquitoes), *Culex* spp. (mosquitoes), *Lucillia* spp. (blowflies), *Blattella germanica* (cockroach), *Periplaneta americana* (cockroach), *Blatta orientalis* (cockroach), termites of the Mastotermitidae (for example *Mastotermes* spp.), the Kalotermitidae (for example *Neotermes* spp.), the Rhinotermitidae (for example *Coptotermes formosanus, Reticulitermes flavipes, R. speratu, R. virginicus, R. hesperus,* and *R. santonensis*) and the Termitidae (for example *Globitermes sulphureus), Solenopsis geminata* (fire ant), *Monomorium pharaonis* (pharaoh's ant), *Damalinia* spp. and *Linognathus* spp. (biting and sucking lice), *Meloidogyne* spp. (root knot nematodes), *Globodera* spp. and *Heterodera* spp. (cyst nematodes), *Pratylenchus* spp. (lesion nematodes), *Rhodopholus* spp. (banana burrowing nematodes), *Tylenchulus* spp.(citrus nematodes), *Haemonchus contortus* (barber pole worm), *Caenorhabditis elegans*_(vinegar eelworm), *Trichostrongylus* spp. (gastro intestinal nematodes) and *Deroceras reticulatum* (slug).
Further examples of the above mentioned pests are:
from the order *Acarina*, for example, Acalitus spp, Aculus spp, Acaricalus spp, Aceria spp, Acarus siro, Amblyomma spp., Argas spp., Boophilus spp., Brevipalpus spp., Bryobia spp, Calipitrimerus spp., Chorioptes spp., Dermanyssus gallinae, Dermatophagoides spp, Eotetranychus spp, Eriophyes spp., Hemitarsonemus spp, Hyalomma spp., Ixodes spp., Olygonychus spp, Ornithodoros spp., Polyphagotarsone latus, Panonychus spp., Phyllocoptruta oleivora, Phytonemus spp, Polyphagotarsonemus spp, Psoroptes spp., Rhipicephalus spp., Rhizoglyphus spp., Sarcoptes spp., Steneotarsonemus spp, Tarsonemus spp. and Tetranychus spp.;
from the order *Anoplura,* for example, Haematopinus spp., Linognathus spp., Pediculus spp., Pemphigus spp. and Phylloxera spp.;
from the order *Coleoptera,* for example, Agriotes spp., Amphimallon majale, Anomala orientalis, Anthonomus spp., Aphodius spp, Astylus atromaculatus, Ataenius spp, Atomaria linearis, Chaetocnema tibialis, Cerotoma spp, Conoderus spp, Cosmopolites spp., Cotinis nitida, Curculio spp., Cyclocephala spp, Dermestes spp., Diabrotica spp., Diloboderus abderus, Epilachna spp., Eremnus spp., Heteronychus arator, Hypothenemus hampei, Lagria vilosa, Leptinotarsa decemLineata, Lissorhoptrus spp., Liogenys spp, Maecolaspis spp, Maladera castanea, Megascelis spp, Melighetes aeneus, Melolontha spp., Myochrous armatus, Orycaephilus spp., Otiorhynchus spp., Phyllophaga spp, Phlyctinus spp., Popillia spp., Psylliodes spp., Rhyssomatus aubtilis, Rhizopertha spp., Scarabeidae, Sitophilus spp., Sitotroga spp., Somaticus spp, Sphenophorus spp, Sternechus subsignatus, Tenebrio spp., Tribolium spp. and Trogoderma spp.;
from the order *Diptera,* for example, Aedes spp., Anopheles spp, Antherigona soccata,Bactrocea oleae, Bibio hortulanus, Bradysia spp, Calliphora erythrocephala, Ceratitis spp., Chrysomyia spp., Culex spp., Cuterebra spp., Dacus spp., Delia spp, Drosophila melanogaster, Fannia spp., Gastrophilus spp., Geomyza tripunctata, Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis spp, Rivelia quadrifasciata, Scatella spp, Sciara spp., Stomoxys spp., Tabanus spp., Tannia spp. and Tipula spp.;
from the order *Hemiptera,* for example, Acanthocoris scabrator, Acrosternum spp, Adelphocoris lineolatus, Amblypelta nitida, Bathycoelia thalassina, Blissus spp, Cimex spp., Clavigralla tomentosicollis, Creontiades spp, Distantiella theobroma, Dichelops furcatus, Dysdercus spp., Edessa spp, Euchistus spp., Eurydema pulchrum, Eurygaster spp., Halyomorpha halys, Horcias nobilellus, Leptocorisa spp., Lygus spp, Margarodes spp, Murgantia histrionic, Neomegalotomus spp, Nesidiocoris tenuis, Nezara spp., Nysius simulans, Oebalus insularis, Piesma spp., Piezodorus spp, Rhodnius spp., Sahlbergella singularis, Scaptocoris castanea, Scotinophara spp. , Thyanta spp , Triatoma spp., Vatiga illudens; Acyrthosium pisum, Adalges spp, Agalliana ensigera, Agonoscena targionii, Aleurodicus spp, Aleurocanthus spp, Aleurolobus barodensis, Aleurothrixus floccosus, Aleyrodes brassicae, Amarasca biguttula, Amritodus atkinsoni, Aonidiella spp., Aphididae, Aphis spp., Aspidiotus spp., Aulacorthum solani, Bactericera cockerelli, Bemisia spp, Brachycaudus spp, Brevicoryne brassicae, Cacopsylla spp, Cavariella aegopodii Scop., Ceroplaster spp., Chrysomphalus aonidium, Chrysomphalus dictyospermi, Cicadella spp, Cofana spectra, Cryptomyzus spp, Cicadulina spp, Coccus hesperidum, Dalbulus maidis, Dialeurodes spp, Diaphorina citri, Diuraphis noxia, Dysaphis spp, Empoasca spp., Eriosoma larigerum, Erythroneura spp., Gascardia spp., Glycaspis brimblecombei, Hyadaphis pseudobrassicae, Hyalopterus spp, Hyperomyzus pallidus, Idioscopus clypealis, Jacobiasca lybica, Laodelphax spp., Lecanium corni, Lepidosaphes spp., Lopaphis erysimi, Lyogenys maidis, Macrosiphum spp., Mahanarva spp, Metcalfa pruinosa, Metopolophium dirhodum, Myndus crudus, Myzus spp., Neotoxoptera sp, Nephotettix spp., Nilaparvata spp., Nippolachnus piri Mats, Odonaspis ruthae, Oregma lanigera Zehnter, Parabemisia myricae, Paratrioza cockerelli, Parlatoria spp., Pemphigus spp., Peregrinus maidis, Perkinsiella spp, Phorodon humuli, Phylloxera spp, Planococcus spp., Pseudaulacaspis spp., Pseudococcus spp., Pseudatomoscelis seriatus, Psylla spp., Pulvinaria aethiopica, Quadraspidiotus spp., Quesada gigas, Recilia dorsalis, Rhopalosiphum spp., Saissetia spp., Scaphoideus spp., Schizaphis spp., Sitobion spp., Sogatella furcifera, Spissistilus festinus, Tarophagus Proserpina, Toxoptera spp, Trialeurodes spp, Tridiscus sporoboli, Trionymus spp, Trioza erytreae , Unaspis citri, Zygina flammigera, Zyginidia scutellaris;
from the order *Heteroptera,* for example, Cimex spp., Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order *Homoptera,* for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysomphalus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Parlatoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri;
from the order *Hymenoptera,* for example, Acromyrmex, Arge spp, Atta spp., Cephus spp., Diprion spp., Diprionidae, Gilpinia polytoma, Hoplocampa spp., Lasius spp., Monomorium pharaonis, Neodiprion spp., Pogonomyrmex spp, Slenopsis invicta, Solenopsis spp. and Vespa spp.;
from the order *Isoptera,* for example, Coptotermes spp, Corniternes cumulans, Incisitermes spp, Macrotermes spp, Mastotermes spp, Microtermes spp, Reticulitermes spp.; Solenopsis geminate ;
from the order *Lepidoptera,* for example, Acleris spp., Adoxophyes spp., Aegeria spp., Agrotis spp., Alabama argillaceae, Amylois spp., Anticarsia gemmatalis, Archips spp., Argyresthia spp, Argyrotaenia spp., Autographa spp., Bucculatrix thurberiella, Busseola fusca, Cadra cautella, Carposina nipponensis, Chilo spp., Choristoneura spp., Chrysoteuchia topiaria, Clysia ambiguella, Cnaphalocrocis spp., Cnephasia spp., Cochylis spp., Coleophora spp., Colias lesbia, Cosmophila flava, Crambus spp, Crocidolomia binotalis, Cryptophlebia leucotreta, Cydalima perspectalis, Cydia spp., Diaphania perspectalis, Diatraea spp., Diparopsis castanea, Earias spp., Eldana saccharina, Ephestia spp., Epinotia spp, Estigmene acrea, Etiella zinckinella, Eucosma spp., Eupoecilia ambiguella, Euproctis spp., Euxoa spp., Feltia jaculiferia, Grapholita spp., Hedya nubiferana, Heliothis spp., Hellula undalis, Herpetogramma spp, Hyphantria cunea, Keiferia lycopersicella, Lasmopalpus lignosellus, Leucoptera scitella, Lithocollethis spp., Lobesia botrana, Loxostege bifidalis, Lymantria spp., Lyonetia spp., Malacosoma spp., Mamestra brassicae, Manduca sexta, Mythimna spp, Noctua spp, Operophtera spp., Orniodes indica, Ostrinia nubilalis, Pammene spp., Pandemis spp., Panolis flammea, Papaipema nebris, Pectinophora gossypiela, Perileucoptera coffeella, Pseudaletia unipuncta, Phthorimaea operculella, Pieris rapae, Pieris spp., Plutella xylostella, Prays spp., Pseudoplusia spp, Rachiplusia nu, Richia albicosta, Scirpophaga spp., Sesamia spp., Sparganothis spp., Spodoptera spp., Sylepta derogate, Synanthedon spp., Thaumetopoea spp., Tortrix spp., Trichoplusia ni, Tuta absoluta, and Yponomeuta spp.;
from the order *Mallophaga,* for example,
Damalinea spp. and Trichodectes spp.;
from the order *Orthoptera,* for example, Blatta spp., Blattella spp., Gryllotalpa spp., Leucophaea maderae, Locusta spp., Neocurtilla hexadactyla, Periplaneta spp. , Scapteriscus spp, and Schistocerca spp.;
from the order *Psocoptera,* for example, Liposcelis spp.;
from the order *Siphonaptera,* for example,Ceratophyllus spp., Ctenocephalides spp. and Xenopsylla cheopis;
from the order *Thysanoptera,* for example,
Calliothrips phaseoli, Frankliniella spp., Heliothrips spp, Hercinothrips spp., Parthenothrips spp, Scirtothrips aurantii, Sericothrips variabilis, Taeniothrips spp., Thrips spp; and from the order *Thysanura,* for example,Lepisma saccharina.

The compounds of formula I according to the present invention, in particular the compound of formula I, wherein X is SO₂, R is hydrogen and R₁ is ethyl; and the compound of formula I, wherein X is SO₂, R is trifluoromethyl and R₁ is ethyl, are in particular effective against *Diabrotica, Rhopalosiphumi, Aphis craccivora and Spodoptera.*

The active ingredients according to the invention can be used for controlling, i. e. containing or destroying, pests of the abovementioned type which occur in particular on plants, especially on useful plants and ornamentals in agriculture, in horticulture and in forests, or on organs, such as fruits, flowers, foliage, stalks, tubers or roots, of such plants, and in some cases even plant organs which are formed at a later point in time remain protected against these pests.

Methods for applying or treating pesticidal active ingredients thereof on to plant propagation material, especially seeds, are known in the art, and include dressing, coating, pelleting and soaking application methods of the propagation material.

The active ingredients can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the compound is applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and the like.

It is preferred that the plant propagation material is a seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also, optionally, be primed either before or after the treatment.

Even distribution of the active ingredients and adherence thereof to the propagation materials is desired during propagation material treatment. Treatment could vary from a thin film (dressing) of the formulation containing the active ingredient(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active ingredients; polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the compound of formula I. In particular, seed coating or seed pelleting are preferred in the treatment of the compound of formula I according to the invention. As a result of the treatment, the compound of formula I is adhered on to the seed and therefore available for pest and/or disease control.

The treated seeds can be stored, handled, sowed and tilled in the same manner as any other active ingredient treated seed.

The compound of formula I according to the present invention is suitable for plants of the crops: cereals (wheat, barley, rye, oats, corn, rice, sorghum, triticale and related crops); beet (sugar beet and fodder beet); leguminous plants (beans, lentils, peas, soybeans); oil plants (rape, mustard, sunflowers); cucumber plants (marrows, cucumbers, melons); fibre plants (cotton, flax, hemp, jute); vegetables (spinach, lettuce, asparagus, cabbages, carrots, onions, tomatoes, potatoes, paprika); as well as ornamentals (flowers, shrubs, broad-leaved trees and evergreens, such as conifers). Especially suitable are wheat, barley, rye, oats, corn and soybean, triticale.

Suitable target crops also include transgenic crop plants of the foregoing types. The transgenic crop plants used according to the invention are plants, or propagation material thereof, which are transformed by means of recombinant DNA technology in such a way that they are - for instance - capable of synthesizing selectively acting toxins as are known, for example, from toxin-producing invertebrates, especially of the phylum Arthropoda, as can be obtained from Bacillus thuringiensis strains; or as are known from plants, such as lectins; or in the alternative capable of expressing a herbicidal or fungicidal resistance. Examples of such toxins, or transgenic plants which are capable of synthesizing such toxins, have been disclosed, for example, in EP-A-0 374 753, WO 93/07278, WO 95/34656, EP-A-0 427 529 and EP-A-451 878 and are incorporated by reference in the present application.

The rates of application (use) of the compound of formula I vary, for example, according to type of use, type of crop, type of plant propagation material but is such that the active ingredient is an effective amount to provide the desired enhanced action (such as disease or pest control) and can be determined by trials.

Generally for seed treatment, application rates can vary from 0.5 to 1000g / 100kg of seeds of active ingredients.

Suitable seed treatment application rates of (I) a compound of formula I tend to be 1 - 300, preferably 2 - 200, more preferably 2.5 - 40g /100kg of seeds, and if one or more pesticides are also present, then rates tend to be 1-700, preferably 2-550, more preferably 2 - 450, g/100kg of seeds of any other pesticides.

The seed treatment composition can also comprise or may be applied together and/or sequentially with further active compounds. These further compounds can be other pesticidal active ingredients, fertilizers or micronutrient donors or other preparations that influence plant growth, such as inoculants.

A single pesticidal active ingredient may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

A compound of formula I may be used either in pure form, i.e., as a solid active ingredient, for example, in a specific particle size, or preferably together with at least one of the auxiliary (also known as adjuvants) customary in formulation technology, such as extenders, e.g., solvents or solid carriers, or surface-active compounds (surfactants), in the form of a formulation, in the present invention. Generally, the compound of formula I is in the form of a formulation composition with one or more of customary formulation auxiliaries.

Therefore, the compound of formula I is normally used in the form of formulations. The compound of formula I can be applied to the locus where control is desired either simultaneously or in succession at short interval, for example on the same day, if desired together with further carriers, surfactants or other application-promoting adjuvants customarily employed in formulation technology.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevail¬ing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

The formulations are prepared in known manner, e.g., by homogeneously mixing and/or grinding the active ingredients with extenders, e.g., solvents, solid carriers and, where appropriate, surface-active compounds (surfactants).

Suitable solvents are: aromatic hydrocarbons, preferably the fractions containing 8 to 12 carbon atoms, e.g. xylene mixtures or substituted naphthalenes, phthalates, such as dibutyl phthalate or dioctyl phthalate, aliphatic hydrocarbons, such as cyclohexane or paraffins, alcohols and glycols and their ethers and esters, such as ethanol, ethylene glycol, ethylene glycol monomethyl or monoethyl ether, ketones, such as cyclohexanone, strongly polar solvents, such as N-methyl-2-pyrrolidone, dimethyl sulfoxide or dimethylformamide, as well as vegetable oils or epoxidised vegetable oils, such as epoxidised coconut oil or soybean oil; or water.

The solid carriers used, e.g., for dusts and dispersible powders, are normally natural mineral fillers, such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite, and suitable nonsorbent carriers are, for example, calcite or sand. In addition, a great number of pregranulated materials of inorganic or organic nature can be used, e.g., especially dolomite or pulverized plant residues.

Depending upon the nature of the active ingredient compounds to be formulated, suitable surface-active compounds are non-ionic, cationic and/or anionic surfactants having good emulsifying, dispersing and wetting properties. The term "surfactants" will also be understood as comprising mixtures of surfactants.

Particularly advantageous application-promoting adjuvants are also natural or synthetic phospholipids of the cephalin and lecithin series, e.g., phosphatidylethanolamine, phosphatidylserine, phosphatidylglycerol and lysolecithin.

Normally, a tank-mix formulation for seed treatment application comprises 0.25 to 80%, especially 1 to 75 %, active ingredient compounds, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, active ingredient compounds, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

The Examples which follow serve to illustrate formulations according to the invention, "active ingredient" denoting a compound of formula I. The Examples are in no way intended to be limiting in nature, i.e., other similar adjuvants known in the art may be substituted for the specifically-disclosed adjuvants provided below.

**Formulation Examples**

| Wettable powders | a) | b) | c) | |
|---|---|---|---|---|
| active ingredient | 25 % | 50 % | 75 % | |
| sodium lignosulfonate | 5 % | 5 % | - | |
| sodium lauryl sulfate | 3 % | - | 5 % | |
| sodium diisobutylnaphthalenesulfonate | - | 6 % | 10 % | |
| phenol polyethylene glycol ether (7-8 mol of ethylene oxide) | - | 2 % | - | |
| highly dispersed silicic acid | 5 % | 10 % | 10 % | |
| Kaolin | | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | - | 20 |

The active ingredient is thoroughly mixed with the adjuvants and the mixture is thoroughly ground in a suitable mill, affording powders that can be used directly for seed treatment.

**Emulsifiable concentrate**

| | |
|---|---|
| active ingredient | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| Cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| Active ingredient | 5 % | 6% | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

**Extruder granules**

| | |
|---|---|
| Active ingredient | 15 % |
| sodium lignosulfonate | 2 % |
| carboxymethylcellulose | 1 % |
| Kaolin | 82 % |

The active ingredient is mixed and ground with the adjuvants, and the mixture is moistened with water. The mixture is extruded and then dried in a stream of air.

**Coated granules**

| | |
|---|---|
| Active ingredient | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

**Suspension concentrate**

| | |
|---|---|
| active ingredient | 40 % |
| propylene glycol | 10 % |
| nonylphenol polyethylene glycol ether (15 mol of ethylene oxide) | 6 % |
| Sodium lignosulfonate | 10 % |
| Carboxymethylcellulose | 1 % |
| silicone oil (in the form of a 75 % emulsion in water) | 1 % |
| Water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

**Flowable concentrate for seed treatment**

| | |
|---|---|
| active ingredient | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Using such formulations either straight or diluted, plant propagation material can be treated and protected against damage, for example, from insecticide(s), by, for example, spraying, pouring or immersing.

Compounds of formula I are distinguished by the fact that they are especially well tolerated by plants and are environmentally friendly.

### Biological examples:

Tested compounds:
No. 1.001: The compound of formula Ia, wherein X₃ is SO₂, R₅ is hydrogen, R₆ is ethyl and R₇ is trifluoromethyl;
No. 1.003: The compound of formula Ia, wherein X₃ is SO, R₅ is hydrogen, R₆ is ethyl and R₇ is trifluoromethyl;
No. 1.005: The compound of formula Ia, wherein X₃ is S, R₅ is hydrogen, R₆ is ethyl and R₇ is trifluoromethyl;

Application rates are given in mg active ingredient/seed.
"mp" means mixed population
"mo" means mortality

### Example B-1: Aphis craccivora (Cowpea aphid) mixed population, systemic/feeding activity on sugar beet, preventative:

A treated sugar beet seed was sown in a 350 ml pot filled with soil. Two weeks after sowing the sugar beet seedling was infested with an aphid population of mixed stages. After an incubation period of seven days the grade of efficacy compared to the control was estimated and expressed in percentage mortatlity. Results are shown in Table B-1:

**Table B-1: control of Aphis craccivora:**

| Compound No. | Application Rate | control mp mo % |
|---|---|---|
| 1.001 | 0.6 | 90 |
| 1.001 | 0.3 | 77 |
| 1.003 | 0.6 | 77 |
| 1.003 | 0.3 | 85 |
| 1.005 | 0.6 | 84 |
| 1.005 | 0.3 | 87 |

## Claims

1. A method for the control of insects or representatives of the order Acarina in a plant propagation material, which comprises applying on the plant propagation material a compound of formula I 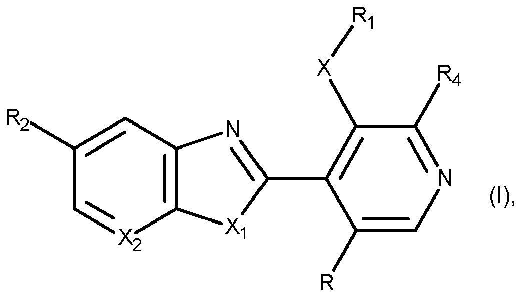
wherein X is S, SO or SO₂ ; R is hydrogen, halogen or C₁-C₄haloalkyl;
X₁ is O, S or N-R₃, wherein R₃ is C₁-C₄alkyl, C₁-C₄haloalkyl or C₁-C₆alkoxy-C₁-C₆alkyl, or X₁ is N-(4-methoxy-benzyl) or N-(propargyl);
X₂ is N, CH, C-halogen, C-CN, C-O-C₁-C₄alkyl, N-(2-chloro-thiazol-5-ylmethyl), C-S-C₁-C₄alkyl, C-SO₂-C₁-C₄alkyl, C-S-phenyl, C-SO₂-phenyl or C-SO₂-C₁-C₄halolakyl;
R₁ is C₁-C₄alkyl, C₁-C₄haloalkyl, C₃-C₆cycloalkyl, C₃-C₆halocycloalkyl, C₂-C₆alkenyl, C₂-C₆haloalkenyl or C₂-C₆alkynyl;
R₂ is halogen, C₁-C₄haloalkyl, C₁-C₄haloalkyl substituted by one or two hydroxy, or R₂ is C₁-C₄haloalkylthio, C₁-C₄haloalkylsulfonyl, O(C₁-C₄haloalkyl), SF₅, phenylcarbonylthio, mercapto, or C₁-C₄alkoxycarbonyl; and
R₄ is hydrogen or halogen;
and agrochemically acceptable salts and N-oxides of those compounds.

2. The method according to claim 1, wherein the compound of formula I is represented by the compounds of formula la, 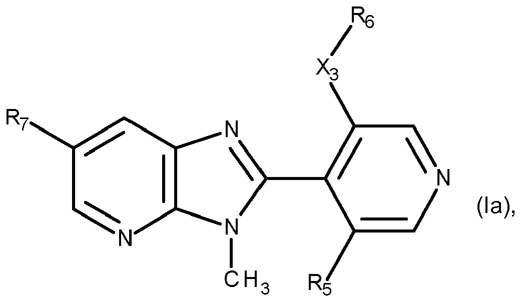 wherein X₃ is S, SO or SO₂; R₅ is hydrogen or C₁-C₄haloalkyl; R₆ is methyl, ethyl, n-propyl or i-propyl; and R₇ is C₁-C₄haloalkyl; and agrochemically acceptable salts and N-oxides of those compounds.

3. The method according to claim 2, wherein in formula la
X₃ is SO₂, R₅ is hydrogen, R₆ is ethyl and R₇ is trifluoromethyl;
X₃ is SO, R₅ is hydrogen, R₆ is ethyl and R₇ is trifluoromethyl; or
X₃ is S, R₅ is hydrogen, R₆ is ethyl and R₇ is trifluoromethyl.

4. The method according to claim 1, wherein the compound of formula I is applied at between 1 to 300 grams per 100 kg of seeds.

5. A plant propagation material treatment composition comprising a compound according to claim 1 and customary formulation auxilaries.

6. A plant propagation material treated with a compound of formula I according to claim 1.
